# EUROPÄISCHE PATENTSCHRIFT

(11) **EP 1 247 669 B1**
(45) Veröffentlichungstag und Bekanntmachung des Hinweises auf die Patenterteilung: **01.06.2005**
(21) Anmeldenummer: 02012803.9
(22) Anmeldetag: 12.12.1996
(51) Int. Cl.: B60H 1/00

(54) **Heizungs- oder Klimaanlage für ein Kraftfahrzeug**
Heating or air conditioning installation for motor vehicles
Installation de chauffage ou de climatisation pour véhicule à moteur

(30) Priorität: 03.04.1996 DE 19613345
(43) Veröffentlichungstag der Anmeldung: 09.10.2002
(62) Teilanmeldung aus: 96119928.8
(73) Patentinhaber: Behr GmbH & Co. KG, 70469 Stuttgart (DE)
(72) Erfinder: Bendell, Ian, 71297 Mönsheim (DE)

(56) Entgegenhaltungen:
- FR-A- 2 623 776
- GB-A- 2 065 866
- US-A- 5 063 832
- US-A- 5 111 738

## Beschreibung

Die Erfindung betrifft eine Heizungs- oder Klimaanlage für ein Kraftfahrzeug nach dem Oberbegriff des Patentanspruchs 1.

Dokument US-A-5, 063, 832 offenbart die merkmale des Oberbegriffs des Anspruchs 1.

Aus der **DE 44 10 120 C2** ist eine Klimaanlage für ein Kraftfahrzeug mit einem Gehäuse, bestehend aus einem Gebläsegehäuse, einem Gehäuseoberteil und einem Gehäuseunterteil, bekannt. Nachteilig an der bekannten Klimaanlage ist, daß mit den einzelnen Gehäuseteilen nur eine einzige Formgebung des Gehäuses erreicht werden kann. Die so gebildete Klimaanlage ist daher ausschließlich für den Einsatz in einem Kraftfahrzeug mit einem entweder auf der linken Seite desselben angeordneten Lenkrads oder auf der rechten Seite desselben angeordneten Lenkrads geeignet.

Es ist daher Aufgabe der Erfindung, eine Heizungs- oder Klimaanlage für ein Kraftfahrzeug derart weiterzubilden, daß das Gehäuse der Anlage auf einfache Weise zusammensetzbar ist, wobei die Anlage für den Einbau in einem Kraftfahrzeug mit einer in einem linken oder rechten Bereich angeordneten Instrumententafel geeignet ist.

Zur Lösung der Aufgabe weist die Erfindung die Merkmale des Patentanspruchs 1 auf. Durch den modularen Aufbau des Gehäuses bzw. des Gebläse-Segments und des Wärmeübertrager-Segments wird eine Heizungs- oder Klimaanlage geschaffen, die dem begrenzten Raumangebot innerhalb des Kraftfahrzeugs gerecht wird. Der modulare Aufbau sowohl des Gebläse-Segments als auch des Wärmeübertrager-Segments ermöglicht, daß das eine Segment unabhängig von dem anderen Segment in seinen Außenabmessungen gestaltet werden kann. So ermöglicht die Erfindung beispielsweise den Einsatz als Heizungs- oder Klimaanlage mit identischem Gebläse-Segment, wobei das Wärmeübertrager-Segment bei Einsatz als Heizungsanlage um die Tiefe des wegfallenden Verdampfers verkürzt ausgebildet sein kann. Hierdurch ist eine bedarfsgerechte Anpassung an das Platzangebot im Kraftfahrzeug ermöglicht. Weiterhin ermöglicht die Erfindung aufgrund des symmetrischen Aufbaus der Segmente, daß das Gehäuse sowohl für den Einsatz in dem Kraftfahrzeug mit einer auf der linken Seite angeordneten Instrumententafel bzw. Lenkrad als auch einer auf der rechten Seite angeordneten Instrumententafel bzw. Lenkrad eingesetzt werden kann. Die Erfindung ermöglicht somit den bezüglich einer Längsebene des Kraftfahrzeugs spiegelbildlichen Einbau der Anlage, wobei die Dimensionen der Armaturenbrettbauteile unverändert ausgelegt sein können. Das führt zu einer erleichterten Montage des Armaturenbretts insgesamt. Dies wird durch den symmetrischen Aufbau des Wärmeübertrager-Segments gewährleistet, wobei das Gebläse-Segment auf der gegenüberliegenden Seite des Wärmeübertrager-Segments nach Abnahme eines die Öffnung verdeckenden Abdeckteils arretierbar ist.

Nach einer Ausgestaltung der Erfindung sind die Segmentteile derart miteinander verbunden, daß eine randseitig am ersten Segmentteil verlaufende Feder in einer zu dieser korrespondierenden Nut des zweiten Segmentteils eingreift und mit der Nut formschlüssig verbunden ist. Dadurch, daß sich die Feder und Nut über die gesamte Länge des Randbereichs der Segmentteile erstrecken, ist eine dauerhafte und dichte Verbindung des Segmentteile gewährleistet.

Nach einer Weiterbildung der Erfindung ist zur Verbindung des Gebläse-Segments und des Wärmeübertrager-Segments ein scharnierartiges Befestigungsmittel vorgesehen, das die Führung gibt zur einfachen Montage derselben. Das erste Segmentteil weist einen Haken auf, der zu einem Bolzen des zweiten Segmentteils korrespondiert, so daß das Gebläse-Segment nach Anlage des Hakens um den Bolzen in einem ersten Verbindungsbereich und nachfolgender Schwenkbewegung durch eine Feder/Nut-Verbindung in einem zweiten Verbindungsbereich mit dem Wärmeübertrager-Segment verbunden ist. Vorteilhafterweise ist der Bolzen von der Seitenwandung des Wärmeübertrager-Segments beabstandet, damit ein leichtes Eingreifen des Hakens ermöglicht wird.

Ein Ausführungsbeispiel der Erfindung ist in der Zeichnung dargestellt und wird nachfolgend näher beschrieben.

Es zeigen:
- **Fig. 1**: Einen Teillängsschnitt der erfindungsgemäßen Anlage;
- **Fig. 2**: einen Längsschnitt der erfindungsgemäßen Anlage entlang der Schnittlinie I-I in Fig. 1;
- **Fig. 3**: einen Schnitt der erfindungsgemäßen Anlage entlang der Linie II-II in Fig. 2 und
- **Fig. 4**: eine perspektivische Darstellung einer Gebläse-Segments und eines Wärmeübertrager-Segments in einem Bereich derselben, in dem das Gebläse-Segment und das Wärmeübertrager-Segment zu der Anlage zusammengesetzt wird.

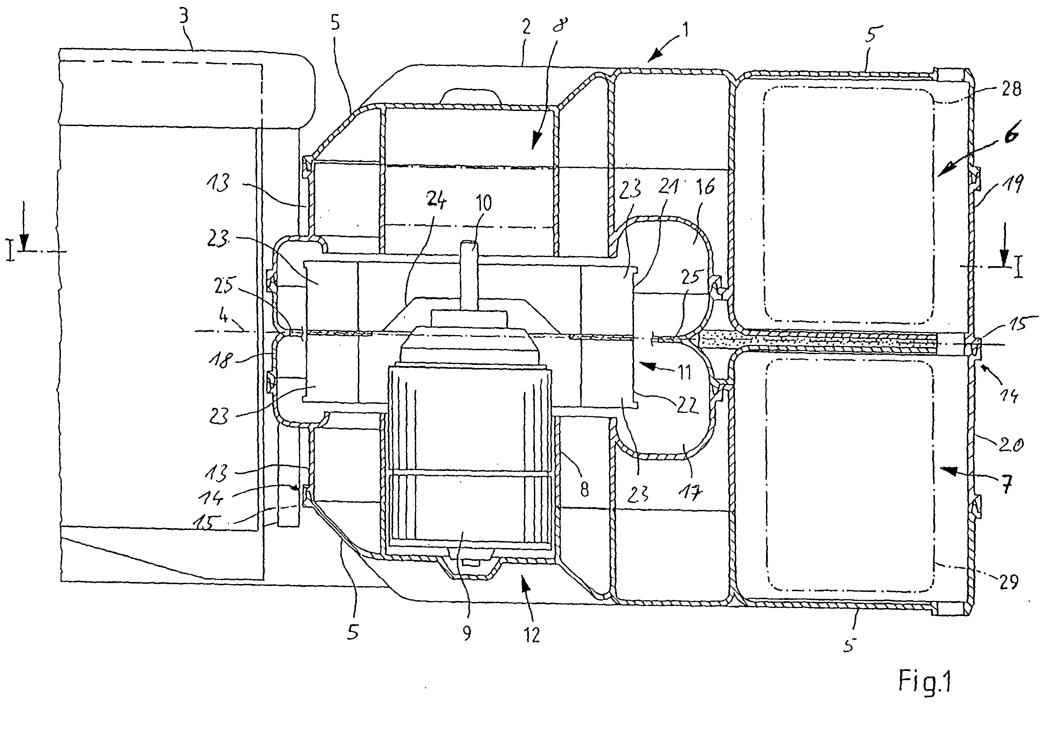

In **Fig. 1** ist eine Klimaanlage, bestehend aus einem Gehäuse 1 mit einem Gebläse-Segment 2 und einem Wärmeübertrager-Segment 3, dargestellt. Die Segmente 2 und 3 bestehen jeweils aus einem Kunststoffmaterial. Das Gebläse-Segment 2 ist bezüglich einer Mittelebene 4 symmetrisch aufgebaut und besteht aus mehreren Segmentteilen 5, 13 und 18. Ein äußeres Segmentteil 5 bildet den tragenden und wesentlichen Bestandteil des Gebläse-Segments 2, wobei am Eingang der Klimaanlage mindestens ein Frischluft-Eingangsstutzen 6 zur Zuführung von Frischluft in einem oberen Bereich und mindestens ein Umluft-Eingangsstutzen 7 zur Zuführung von Umluft in einem unteren Bereich ausgebildet ist. In einem in Luftströmrichtung vorderen Bereich weist das äußere Segmentteil 13 eine nach innen ragende zylindrische Wandung auf, die als Aufnahmetasche 8 zur Aufnahme eines Gebläsemotors 9 dient. Der in der Aufnahmetasche 8 gelagerte Gebläsemotor 9 weist eine Antriebswelle 10 auf, mit der ein Laufrad 11 drehfest verbunden ist. Ein so gebildetes Gebläse 12 kann wahlweise in einer oberen Aufnahmetasche 8 oder in einer unteren Aufnahmetasche 8 desjeweiligen äußeren Segmentteils 13 gelagert sein.

An das äußere Segmentteil 5 schließt sich in einem Randbereich zu dem Wärmeübertrager-Segment 3 jeweils das gabelförmiges Segmentteil 13 an. Zur Verbindung mit dem äußeren Segmentteil 5 weist das gabelförmige Segmentteil 13 eine Nut 14 auf, in die eine korrespondierende Feder 15 des äußeren Segmentteils 5 eingreift bzw. eingesetzt wird, so daß die beiden Segmentteile 5 und 13 formschlüssig miteinander verbunden sind. Das gabelförmige Segmentteil 13 erstreckt sich ringförmig um das Gebläse 12. Zur Ausbildung einer Frischluftkammer 16 und einer Umluftkammer 17 werden die beiden gabelförmigen Segmentteile 13 mit einem mittleren Segmentteil 18 verbunden. Zu diesem Zweck weist das mittlere Segmentteil 18 an zwei Enden jeweils eine Feder 15 auf, die jeweils in korrespondierende Nuten 14 des gabelförmigen Segmentteils 13 gehalten sind.

Die am Eingang des Gebläse-Segments 2 angeordnete obere Ansatzwandung 19 und untere Ansatzwandung 20 weisen ebenfalls Nuten 14 und Federn 15 auf, durch die sie mit dem äußeren Segmentteil 5 verbunden sind. Das Gebläse-Segment 2 wird somit aus mehreren Segmentteilen 5, 13, 18 gebildet, die durch eine Nut/Feder-Verbindung mit einer jeweiligen Feder 15 und jeweiligen Nut 14 lagerichtig gehalten sind. Durch außenseitig angebrachte, nicht dargestellte Befestigungsmittel werden die Segmente dann durch Verrastung bzw. Verclipsung kraftschlüssig miteinander verbunden.

Das Laufrad 11 besteht aus einem ersten und einem zweiten Teillaufrad 21 bzw. 22 mit Schaufeln 23, wobei die Teillaufräder 21 und 22 symmetrisch zu der Mittelebene 4 angeordnet sind und eine gemeinsame Verbindungswand 24 aufweisen. Diese Verbindungswand 24 erstreckt sich in der Mittelebene 4. Zur Ausbildung der Frischluftkammer 16 und der Umluftkammer 17, wobei die Frischluftkammer 16 mit dem Frischluft-Eingangsstutzen 6 und die Umluftkammer 17 mit dem Umluft-Eingangsstutzen 7 in Verbindung steht, weist das mittlere Segmentteil 18 eine radial laufende Trennwand 25 auf, die sich mit Abstand bis zum Laufrad 11 erstreckt. Es ist ausreichend, wenn ein geringer Abstand des Endes der Trennwand 25 zum Laufrad 11 eingehalten wird, da infolge der gerichteten, ringförmigen Ansaugung der Luft durch das Gebläse 12 ein Luftaustausch zwischen den Kammern 16 und 17 weitgehend vermieden wird. Die Verbindungswand 24 ist als durchgehende, geschlossene Wand ausgebildet, so daß im Bereich des Laufrades 11 kein Luftaustausch zwischen den Kammern 16 und 17 erfolgen kann.

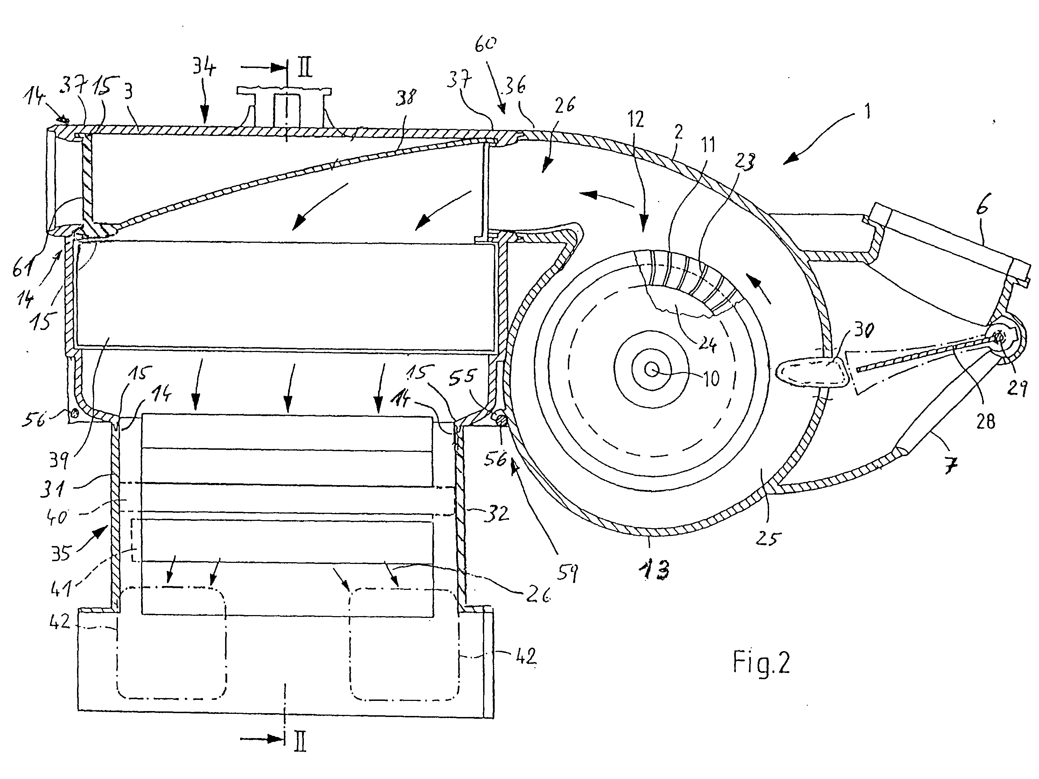

Wie aus Fig. 2 zu ersehen ist, ist eine jeweils einem Frischluftkanal 26 und einem Umluftkanal 27 zugeordnete Eingangssteuerklappe 28 zur Steuerung der Luftmenge vorgesehen. Die beiden Eingangssteuerklappen 28 sind auf einer gemeinsamen Drehachse 29 drehbar gelagert, wobei die obere Eingangssteuerklappe 28 die durch den Frischlufteingangsstutzen 6 eingeleite Frischluftmenge in die Frischluftkammer 16 und die untere Eingangssteuerklappe 28 die durch den Umlufteingangsstutzen 7 eingeleitete Umluft in die Umluftkammer 17 steuert. Ein im Eingangsbereich angeordnetes Luftleitelement 30 verhindert, daß sich die Frischluft und die Umluft vor Eintritt in die schneckenförmig ausgebildete Frischluftkammer 16 und Umluftkammer 17 mischt.

Damit die getrennte Luftführung in einem Frischluftkanal 26 einerseits und in einem Umluftkanal 27 andererseits in dem Wärmeübertrager-Segment 3 weitgehend aufrechterhalten werden kann, weist mindestens eine der Seitenwandungen 31, 32 des Wärmeübertrager-Segments 3 eine Trennwand 33 auf, die sich von der ersten Seitenwandung 31 bis zur zweiten Seitenwandung 32 erstreckt. In Strömungsrichtung erstreckt sich die Trennwand 33 von einem Luftleitelement 38 des Wärmeübertrager-Segments 3 mit Unterbrechungen, in denen Wärmeübertrager angeordnet sind, bis hin zu einem Auslaßbereich 35 des Wärmeübertrager-Segments 3. Zur Umlenkung der durch einen Ausgangsstutzen 36 des Gebläse-Segments 2 strömenden Frisch- und Umluftstroms ist in Fortsetzung eines Eingangsstutzens 37 des Wärmeübertrager-Segments 3 ein bogenförmiges Luftleitelement 38 angeordnet, das den Luftstrom zu einem Verdampfer 39 hin umlenkt, so daß diese im wesentlichen frei von Verwirbelungen in den Verdampfer 39 eingeleitet werden. Alternativ kann sich das Luftleitelement 38 auch stufenförmig von einer Stirnwand 34 hin zu dem Verdampfer 39 erstrecken, so daß gleichfalls eine gleichmäßige Durchströmung des Verdampfers 39 gewährleistet ist. Im weiteren Verlauf werden der Frischluftstrom und der Umluftstrom jeweils getrennt in dem Frischluftkanal 26 bzw. Umluftkanal 27 einem Heizkörper 40 und einer als PTC-Heizung ausgebildeten Zusatzheizung 41 zugeleitet, bevor Sie durch geeignete Stellelemente in dem Auslaßbereich 35 den entsprechenden Auslaßstutzen zugeführt werden.

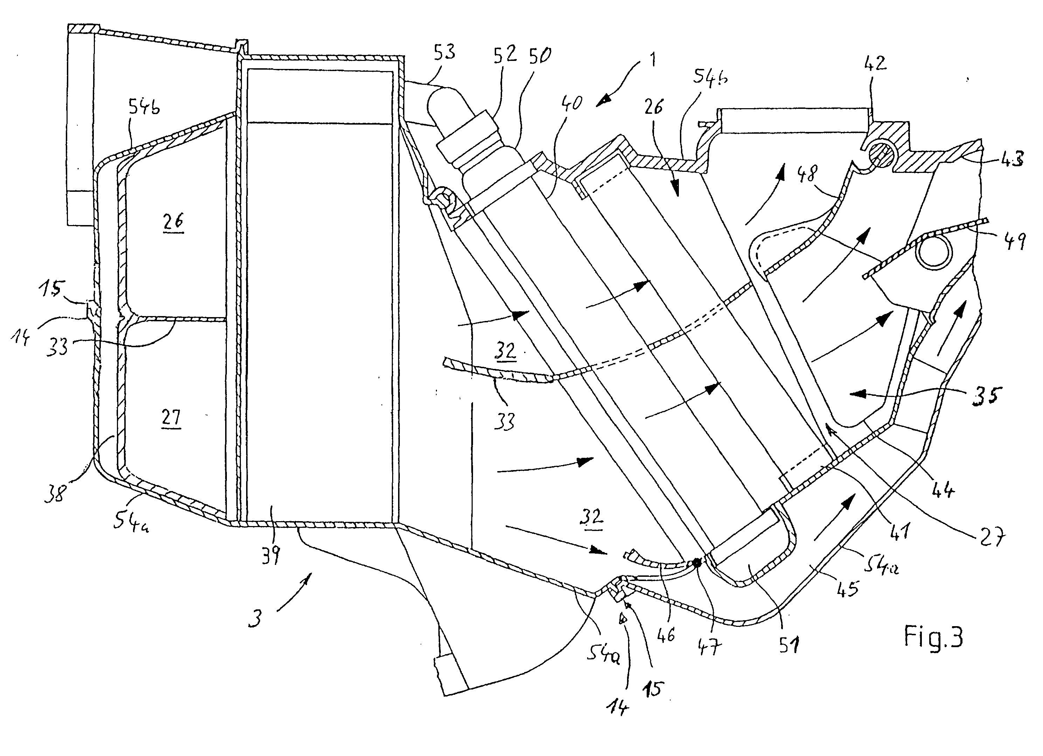

Wie aus **Fig. 3** ersichtlich, sind im Auslaßbereich 35 mehrere Ausgangsstutzen angeordnet, wobei ein Defroster-Ausgangsstutzen 42 dem Frischluftkanal 26 und ein mittlerer Ausgangsstutzen 43 sowie ein Fußraum-Ausgangsstutzen 44 dem Umluftkanal 27 zugeordnet sind. In dieser Betriebsstellung wird dem mit einer nicht dargestellten Defrosterdüse in Verbindung stehender Defroster-Ausgangsstutzen 42 trockene und gegebenenfalls erwärmte Frischluft zugeführt, so daß ein Beschlagen der Winschutzscheibe wirksam vermieden bzw. schneller beendet wird. Der mittlere Ausgangsstutzen 43, der mit Mitteldüsen und Seitendüsen in Verbindung steht, und der Fußraum-Ausgangsstutzen 44, der mit einer Fußraumdüse in Verbindung steht, erhalten die Umluft aus dem Fahrzeuginnenraum, wobei diese je nach den Bedürfnissen der Bedienperson mit einer vorgewählten Temperatur bereitgestellt wird. Die Temperatursteuerung der Umluft und der Frischluft kann dabei in begrenztem Rahmen unabhängig voneinander erfolgen. Zu diesem Zweck wird die Zusatzheizung 41 getrennt nach Frischluftkanal 26 und Umluftkanal 27 angesteuert.

Außenseitig neben dem Umluftkanal 27 erstreckt sich ein Bypasskanal 45, an dessen Eingang vorzugsweise eine Steuerklappe 46 drehbar um eine Schwenkachse 47 gelagert ist. Je nach Stellung der Steuerklappe 46 wird ein mehr oder weniger großer Teilstrom der Umluft an dem Heizkörper 40 und der Zusatzheizung 41 herumgeleitet, so daß gekühlte Luft dem mittleren Ausgangsstutzen 43 zur Verfügung gestellt werden kann.

Vorzugsweise ist im Auslaßbereich 35 in Verlängerung der Trennwand 33 ein Luftleitelement 48 angeordnet, das zum einen die Trennung von Frischluft und Umluft aufrechterhält und zum anderen durch seine drehbare Lagerung als Klappe ausgebildet ist. Bei Verstellung des Luftleitelements 48 aus der Mittelstellung in Richtung des Frischluftkanals 26 oder des Umluftkanals 27, wird ein Teilstrom der Frischluft dem mittleren Ausgangsstutzen 43 oder dem Fußraum-Ausgangsstutzen 44 bzw. ein Teilstrom der Umluft dem Defroster-Ausgangsstutzen 42 zugeführt. Auf diese Weise läßt sich ausgangsseitig eine begrenzte Vermischung von Frischluft und Umluft erreichen, so daß beispielsweise an extrem kalten Wintertagen und beim Starten des Fahrzeugs eine durch Sonnenstrahlung im Fahrzeuginnenraum erhitzte Umluft zur Vermeidung des Beschlagens der Windschutzscheibe dem Defroster-Ausgangsstutzen 42 zugeführt werden kann.

Weiterhin ist in dem Auslaßbereich 35 eine drehbar gelagerte Schwenkklappe 49 angeordnet, mit der die Luftströmungsrichtung der Umluft und die Umluftmenge gesteuert werden kann.

Der Heizkörper 40 weist einem oberen Wasserkasten 50 und einen unteren Wasserkasten 51 auf. An dem oberen Wasserkasten 50 befinden sich Aufnahmestutzen 52 zur Aufnahme und Befestigung von Anschlußrohren 53, durch die das Heizmedium dem Heizkörper 40 zugeleitet wird.

Das Wärmeübertrager-Segment 3 ist wie das Gebläse-Segment 2 aus mehreren Segmentteilen aufgebaut. Die Seitenwandungen 31 und 32 bestehen jeweils aus zwei Segmentteilen 54a, 54b, die mittels einer Feder/Nut- Verbindung miteinander verbunden sind. Dazu weisen sie, wie die Segmentteile des Gebläse-Segments 2, randseitig verlaufende Federn 15 auf, die jeweils in eine korrespondierende Nut 15 eingreifen und mit dieser formschlüssig verbunden sind. Vorzugsweise ist der untere Segmentteil 54a als einstückige Wanne ausgebildet, so daß lediglich das obere Segmentteil 54b aus zwei Wandabschnitten besteht. Das Wärmeübertrager-Segment 3 ist symmetrisch bezüglich der sich entlang der Schnittebene II-II aus Fig. 2 erstreckenden Längsebene aufgebaut. Dadurch ist es möglich, daß durch Umlegen des Luftleitelements 38 und Anbringen des Gebläse-Segments 2 an dem gegenüberliegenden Eingangsstutzen 37 des Wärmeübertrager-Segments 3 eine Klimaanlage geschaffen wird, die in einem Kraftfahrzeug einsetzbar ist, dessen Instrumententafel auf einer anderen Seite angeordnet ist. Durch diese Maßnahme sind konstruktive Änderungen im Bereich des Armaturenbretts bzw. der Instrumententafel nicht notwendig, so daß ein einfacher Einbau der Klimaanlage sowohl in einem linksgelenkten Fahrzeug als auch in einem rechtsgelenkten Fahrzeug gewährleistet ist.

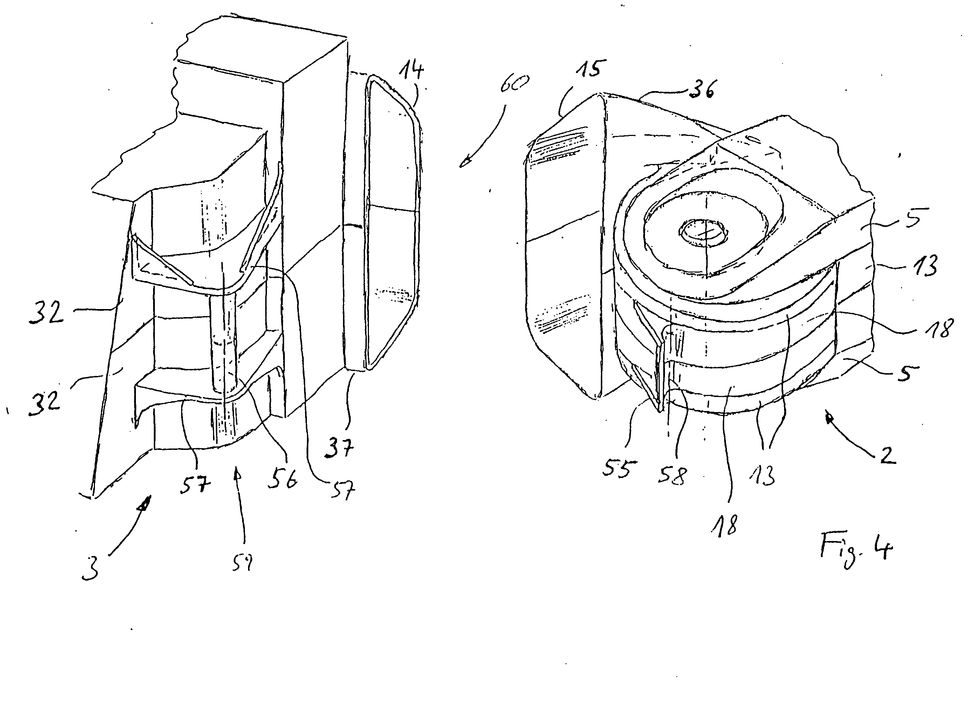

**Fig. 4** zeigt eine perspektivische Darstellung des Wärmeübertrager-Segments 3 im Bereich des Eingangsstutzens 37 (linke Seite) und eines Gebläse-Segments 2 in dem Bereich des Ausgangsstutzens 36 (rechte Seite). Zur Verbindung des Gebläse-Segments 2 mit dem Wärmeübertrager-Segment 3 wird ein sich über die Segmentteil 18 erstrekkender und an diese angeformter Haken 55 an die Umfangsfläche eines Bolzens 56 des Wärmeübertrager-Segments 3 angelegt. Der Bolzen 56 ist zylinderförmig ausgebildet und ist an seinen Stirnseiten mit jeweils einer Tragwand 57 verbunden, die sich senkrecht zu der Seitenwandung 32 des Wärmeübertrager-Segments 3 erstreckt und an diese angeformt ist. Die Länge des Bolzens 56 entspricht im wesentlichen der randseitigen Länge des Hakens 55, der sich mit seinen innenseitigen gebogenen Flächen 58 in einem ersten Verbindungsbereich 59 auf die Umfangsfläche des Bolzens 56 legt. Durch nachfolgende Schwenkbewegung des Gebläse-Segments 2 und/oder des Wärmeübertrager-Segments 3 in Richtung zueinander erfolgt in einem zweiten Verbindungsbereich 60 die Anlage des Ausgangsstutzens 36 des Gebläse-Segments 2 mit dem Eingangsstutzens 37 des Wärmeübertrager-Segments 3. Zu diesem Zweck weist der Ausgangsstutzen 36 eine hervorstehende Feder 15 auf, die in eine korrespondierende Nut 14 eingreift und in dieser gehalten ist. Vorzugsweise ist die Längserstreckung des Hakens 55 unwesentlich geringer als der Abstand der innenseitigen Flächen der parallel angeordneten Tragwände 57, so daß eine sichere Führung für die Schwenkbewegung und die nachfolgende Verrastung des Ausgangsstutzens 36 mit dem Eingangsstutzen 37 gegeben ist.

Zur Verbindung des Gebläse-Segments 2 mit dem Wärmeübertrager-Segment 3 auf der gegenüberliegenden Seite des Wärmeübertrager-Segments 3 an der Seitenwandung 31 weist das Wärmeübertrager-Segment 3 einen weiteren Bolzen 56 auf, der symmetrisch zu dem der Seitenwandung 32 zugeordnetem Bolzen 56 angeordnet ist. Da das Gebläse-Segment 2 symmetrisch ausgebildet ist, kann dieses seitenverkehrt an dem der Seitenwandung 31 zugeordneten Eingangsstutzen 37 arretiert werden, wobei die vormalige Frischluftkammer 16 als Umluftkammer 17 und die vormalige Umluftkammer 17 als Frischluftkammer 16 dient. Die einzelnen Segmentteile 5, 13, 18 und die Seitenwandungen 31, 32 werden durch nicht dargestellte Verrastungen kraftschlüssig zu dem Gehäuse 1 zusammengehalten. Sie werden vorzugsweise jeweils als Spritzgußteile aus Kunststoff hergestellt. Zusätzlich braucht lediglich das Luftleitelement 38 um 180° verdreht werden, so daß ein Verschlußabschnitt 61 des Luftleitelements 38 den gegenüberliegenden Eingangsstutzen 37 verschließt. Die formschlüssige Verbindung erfolgt durch Eingreifen der Feder 15 in die dafür vorgesehene Nut 14 der Seitenwandung 32 bzw. der Seitenwand 34.

## Patentansprüche

1. Gehäuse (1) für eine Heizungs- oder Klimaanlage zur Anordnung in einem Kraftfahrzeug mit einem ersten Gehäusesegment (3) und einem zweiten Gehäusesegement (2), das auf der einem Lenkrad gegenüberliegenden Seite des ersten Gehäusesegements (3) angeordnet ist, **dadurch gekennzeichnet, dass** das erste Gehäusesegment (3) bezüglich einer entlang einer Schnittebene verlaufenden Längsebene symmetrisch ausgebildet ist und zur wahlweisen Befestigung des zweiten Gehäusesegments (2) auf der einem Lenkrad gegenüberliegenden Seite des ersten Gehäusesegements (3) ausgeführt ist.

2. Gehäuse nach Anspruch 1, **dadurch gekennzeichnet, dass** das zweite Gehäusesegment (2) symmetrisch zu einer Mitteiebene (4) ausgeführt ist.

3. Gehäuse nach Anspruch 1 oder 2, **dadurch gekennzeichnet, dass** das erste Gehäusesegment (3) als Wärmetauscher-Segment zur Aufnahme mindestens eines Wärmetauschers (39, 40, 41) und das zweite Gehäusesegment als Gebläse-Segment zur Aufnahme eines Gebläsemotors (9) ausgeführt ist.

4. Gehäuse nach Anspruch 3, **dadurch gekennzeichnet, dass** innerhalb des Gebläse-Segments (2) der Gebläsemotor (9) in einer oberen oder einer unteren Aufnahmetasche (8) gelagert ist, wobei die Aufnahmetaschen (8) symmetrisch zur Mittelebene (4) ausgeführt sind.

5. Gehäuse nach Anspruch 3 oder 4, **dadurch gekennzeichnet, dass** am bzw. im Gebläse-Segment (2) zwei Lufteinlassstutzen (6, 7) mit zugehörigen Luftkanälen (26, 27) symmetrisch zu der Mittelebene (4) angeordnet sind, wobei abhängig von der Anordnung des zweiten Gehäusesegments (2) am ersten Gehäusesegment (3) einer der beiden Lufteinlassstutzen (6) mit zugehörigem Luftkanal (26) zur Führung von Frischluft und der andere der beiden Lufteinlassstutzen (7) mit zugehörigem Luftkanal (27) zur Führung von Umluft benutzbar ist.

6. Gehäuse nach einem der Ansprüche 3 bis 5, **dadurch gekennzeichnet, dass** am Wärmetauscher-Segment (3) zwei Eingangsstutzen (37) zur Aufnahme des Frischluftstromes und/oder des Umluftstromes aus dem Gebläse-Segement (2) vorhanden sind, wobei der Eingangsstutzen (37) geöffnet ist, der mit einem Ausgangsstutzen (36) des Gebläsesegments (2) verbunden ist, und wobei der gegenüberliegende Eingangsstutzen verschlossen ist.

7. Gehäuse nach Anspruch 6, **dadurch gekennzeichnet, dass** im ersten Gehäusesegment ein um 180° verdrehbares Luftleitelement (38) zur Fortsetzung eines Eingangsstutzens (37) für einen Frisch- und/oder Umluftstrom vorhanden ist, das zur Anpassung an die Anordnung des zweiten Gehäusesegements (2) am ersten Gehäusesegement (3) umlegbar ist.

8. Gehäuse nach Anspruch 7, **dadurch gekennzeichnet, dass** das Luftleitelement (38) einen Verschlußabschnitt (61) aufweist, das den gegenüberliegenden Eingangsstutzen (37) des erstem Gehäusesegments verschließt.

9. Gehäuse nach einem der vorhergehenden Ansprüche, **dadurch gekennzeichnet, dass** die Mittelebene (4) des zweiten Gehäusesegments (2) senkrecht zur Längsebene des ersten Gehäusesegments (3) verläuft.

10. Gehäuse nach einem der vorhergehenden Ansprüche, **dadurch gekennzeichnet, dass** das Gehäuse 1 bezüglich einer Kraftfahrzeuglängsebene spiegelbildlich im Kraftfahrzeug einbaubar ist.

11. Klimaanlage mit einem Gehäuse nach zumindest einem der vorhergehenden Ansprüche.

## Claims

1. Housing (1) for a heating or air conditioning system for arrangement in a motor vehicle comprising a first housing segment (3) and a second housing segment (2), which is arranged on the side of the first housing segment (3) opposing a steering wheel, **characterised in that** the first housing segment (3) is designed symmetrically with respect to a longitudinal plane extending along a sectional plane and is configured for the fastening of the second housing segment (2) as desired on the side of the first housing segment (3) opposing a steering wheel.

2. Housing according to claim 1, **characterised in that** the second housing segment (2) is configured symmetrically to a centre plane (4).

3. Housing according to claim 1 or 2, **characterised in that** the first housing segment (3) is configured as a heat exchanger segment for receiving at least one heat exchanger (39, 40, 41) and the second housing segment is configured as a fan segment for receiving a fan motor (9).

4. Housing according to claim 3, **characterised in that**, within the fan segment (2), the fan motor (9) is mounted in an upper or a lower receiving pocket (8), the receiving pockets (8) being configured symmetrically to the centre plane (4).

5. Housing according to claims 3 or 4, **characterised in that** two air inlet connection pieces (6, 7) with associated air channels (26, 27) are arranged symmetrically to the centre plane (4) on or in the fan segment (2), wherein, depending on the arrangement of the second housing segment (2) on the first housing segment (3), one of the two inlet connection pieces (6) with an associated air channel (26) can be used to guide fresh air and the other of the two air inlet connection pieces (7) with an associated air channel (27) can be used to guide circulating air.

6. Housing according to any one of claims 3 to 5, **characterised in that** two inlet connection pieces (37) are provided on the heat exchanger segment (3) to receive the fresh air flow and/or the circulating air flow from the fan segment (2), the inlet connection piece (37), which is connected to the outlet connection piece (36) of the fan segment (2), being open and the opposing inlet connection piece being closed.

7. Housing according to claim 6, **characterised in that**, in the first housing segment, an air guiding element (38) which can be rotated by 180° is present for the continuation of an inlet connection piece (37) for a fresh and/or circulating air flow, and can be displaced on the first housing segment (3) for adaptation to the arrangement of the second housing segment (2).

8. Housing according to claim 7, **characterised in that** the air guiding element (38) has a closure section (61) which closes the opposing inlet connection piece (37) of the first housing segment.

9. Housing according to any one of the preceding claims, **characterised in that** the centre plane (4) of the second housing segment (2) extends perpendicularly to the longitudinal plane of the first housing segment (3).

10. Housing according to any one of the preceding claims, **characterised in that** the housing (1) can be installed in a mirror-inverted manner in the motor vehicle with respect to a longitudinal plane of the motor vehicle.

11. Air conditioning system comprising a housing according to at least any one of the preceding claims.

## Revendications

1. Carter (1) pour un système de chauffage ou de climatisation, prévu pour l'agencement dans un véhicule automobile et comprenant un premier segment (3) de carter et un second segment (2) de carter qui est disposé sur le côté placé à l'opposé d'un volant de direction du premier segment (3) de carter, **caractérisé en ce que** le premier segment de carter (3) est configuré de façon symétrique par rapport à un plan longitudinal s'étendant le long d'un plan en coupe et est réalisé pour la fixation facultative du second segment (2) de carter sur le côté - placé à l'opposé d'un volant de direction - du premier segment (3) de carter.

2. Carter selon la revendication 1, **caractérisé en ce que** le second segment (2) de carter est réalisé de façon symétrique par rapport à un plan médian (4).

3. Carter selon la revendication 1 ou 2, **caractérisé en ce que** le premier segment de carter (3) est réalisé comme un segment d'échangeur de chaleur, pour loger au moins un échangeur de chaleur (39, 40, 41), et le second segment de carter est réalisé comme un segment de ventilateur pour loger un moteur (9) de ventilateur.

4. Carter selon la revendication 3, **caractérisé en ce que** le moteur (9) de ventilateur, à l'intérieur des limites du segment (2) de ventilateur, est monté dans une poche d'admission (8) supérieure ou inférieure, où les poches d'admission (8) sont réalisées de façon symétrique par rapport au plan médian (4).

5. Carter selon la revendication 3 ou 4, **caractérisé en ce que**, sur ou dans le segment (2) de ventilateur, deux tubulures d'entrée d'air (6, 7), comportant des conduits d'air associés (26, 27), sont disposées de façon symétrique par rapport au plan médian (4), où, en fonction de la disposition du second segment (2) de carter sur le premier segment (3) de carter, l'une des deux tubulures d'entrée d'air (6), comportant un conduit d'air associé (26), peut être utilisée pour faire passer de l'air frais, et l'autre tubulure d'entrée d'air (7), comportant un conduit d'air associé (27), peut être utilisée pour le passage d'air de circulation.

6. Carter selon l'une quelconque des revendications 3 à 5, **caractérisé en ce qu'**il est prévu, sur le segment (3) d'échangeur de chaleur, deux tubulures d'entrée (37) servant à capter le flux d'air frais et/ou le flux d'air de circulation provenant du segment (2) de ventilateur, où la tubulure d'entrée (37), qui est reliée à une tubulure de sortie (36) du segment (2) de ventilateur, est ouverte, et où la tubulure d'entrée opposée est fermée.

7. Carter selon la revendication 6, **caractérisé en ce qu'**il est prévu, dans le premier segment de carter, un élément de circulation d'air (38) pouvant pivoter de 180° et servant à prolonger une tubulure d'entrée (37) pour un flux d'air frais et/ou d'air de circulation, lequel élément de circulation d'air est rabattable pour s'adapter à l'agencement du second segment (2) de carter sur le premier segment (3) de carter.

8. Carter selon la revendication 7, **caractérisé en ce que** l'élément de circulation d'air (38) présente une partie d'obturation (61) qui obture la tubulure d'entrée opposée (37) du premier segment de carter.

9. Carter selon l'une quelconque des revendications précédentes, **caractérisé en ce que** le plan médian (4) du second segment (2) de carter s'étend de façon perpendiculaire au plan longitudinal du premier segment (3) de carter.

10. Carter selon l'une quelconque des revendications précédentes, **caractérisé en ce que** le carter (1) peut être monté, dans le véhicule automobile, de façon symétrique par rapport à un plan longitudinal du véhicule automobile.

11. Système de climatisation comprenant un carter selon au moins l'une quelconque des revendications précédentes.
